(19) Europäisches Patentamt

European Patent Office

Office européen des brevets

(11) **EP 0 816 289 B1**

(12) **EUROPÄISCHE PATENTSCHRIFT**

(45) Veröffentlichungstag und Bekanntmachung des Hinweises auf die Patenterteilung:
**26.01.2000 Patentblatt 2000/04**

(51) Int Cl.7: **C01B 25/455**

(21) Anmeldenummer: **97109919.7**

(22) Anmeldetag: **18.06.1997**

(54) **Verfahren zur Herstellung von Lithiumhexafluorphosphat**

Process for preparing lithium hexafluorophosphate

Procédé pour la préparation de hexafluorophosphate de lithium

(84) Benannte Vertragsstaaten:
**AT BE CH DE DK ES FI FR GB GR IE IT LI LU NL PT SE**

(30) Priorität: **26.06.1996 DE 19625448**

(43) Veröffentlichungstag der Anmeldung:
**07.01.1998 Patentblatt 1998/02**

(73) Patentinhaber: **Solvay Fluor und Derivate GmbH D-30173 Hannover (DE)**

(72) Erfinder:
- **Belt, Heinz-Joachim**
  **30938 Burgwedel (DE)**
- **Rudolph, Werner**
  **30559 Hannover (DE)**
- **Seffer, Dirk**
  **31535 Neustadt (DE)**

(74) Vertreter: **Lauer, Dieter, Dr.**
**Solvay Pharmaceuticals GmbH,**
**Hans-Böckler-Allee 20**
**30173 Hannover (DE)**

(56) Entgegenhaltungen:
**DE-A- 19 614 503        US-A- 3 607 020**
**US-A- 5 378 445**

- **DATABASE WPI Section Ch, Week 8605 Derwent Publications Ltd., London, GB; Class E34, AN 86-031393 XP002043503 & JP 60 251 109 A (DAIKIN KOGYO KK) , 11.Dezember 1985**
- **DATABASE WPI Section Ch, Week 9347 Derwent Publications Ltd., London, GB; Class E34, AN 93-374327 XP002043504 & JP 05 279 003 A (MORITA KAGAKU KOGYO KK) , 26.Oktober 1993**
- **DATABASE WPI Section Ch, Week 9231 Derwent Publications Ltd., London, GB; Class E34, AN 92-256415 XP002043508 & JP 04 175 216 A (TOCHEM PROD KK) , 23.Juni 1992**

**Beschreibung**

Die Erfindung betrifft ein Verfahren zur Herstellung von Lithiumhexafluorphosphat durch Umsetzung von Phosphorpentachlorid, Lithiumfluorid und Fluorwasserstoff.

Lithiumhexafluorphosphat kann als Elektrolyt in Primär-und Sekundär-Elementen eingesetzt werden. Derartige Elemente umfassen eine Anode, eine Kathode sowie einen Elektrolyten, der in einem aprotischen nicht wäßrigen Lösungsmittel gelöst ist. Primärelemente sind nicht wieder aufladbar. Ein solches Primärelement wird beispielsweise in der deutschen Offenlegungsschrift DE-OS 19 35 941 (= US-A 3,546,022) offenbart. Das dort beschriebene Primärelement umfaßt eine Natriumanode sowie eine elementaren Schwefel enthaltende Kathode. Das als Elektrolyt verwendete Lithiumhexafluorphosphat ist in einem Polyäther als Lösungsmittel gelöst.

Sekundärelemente werden in der US-Patentschrift 5,427,874 beschrieben. Als Anode wird Kohlenstoffmaterial verwendet, welches lithiumdotiert ist, als Kathode werden beispielsweise gemischte Oxide von Lithium und Kobalt verwendet. Als Elektrolyt ist u. a. Lithiumhexafluorphosphat einsetzbar, als Lösungsmittel werden bestimmte Pyrocarbonate (Anhydride von Kohlensäureestern) eingesetzt.

Auch die europäische Patentanmeldung EP-A-0 385 724 (= US-A 4,880,714) offenbart elektrochemische Zellen mit Lithiumhexafluorphosphat als Elektrolyt. Der lithiumhaltige Elektrolyt wird in einem Lösemittelgemisch aus Propylencarbonat und Dimethoxyethan eingesetzt. Problematisch ist, daß Lithiumhexafluorphosphat in seiner reinen Form instabil ist. Außerdem ist es stark hygroskopisch, so daß die Herstellung nicht einfach ist. Die EP-A-0 385 724 schlägt deshalb zur Herstellung von Lithiumhexafluorphosphat ein Verfahren vor, bei welchem das Salz einer Lewis-Base und Hexafluorphosphorsäure mit einer Lithiumbase umgesetzt wird. Die Umsetzung, beispielsweise von Ammoniumhexafluorphosphat und Lithiumhydrid, wird in einem komplexierenden Lösungsmittel wie 1,2-Dimethoxyethan durchgeführt, der resultierende Komplex von Lithiumhexafluorphosphat und 2 Molekülen 1,2-Dimethoxyethan fällt aus und kann isoliert werden.

Aufgabe der vorliegenden Erfindung ist es, ein ein-faches, leicht durchzuführendes Verfahren für die Herstellung von Lithiumhexafluorphosphat anzugeben. Diese Aufgabe wird durch das Verfahren der vorliegenden Erfindung gelöst.

Erfindungsgemäß erfolgt die Herstellung von Lithiumhexafluorphosphat durch Umsetzung von Phosphorpentachlorid, Lithiumfluorid und Fluorwasserstoff, wobei man Phosphorpentachlorid und Lithiumfluorid vorlegt, abkühlt und Fluorwasserstoff in mindestens der stöchiometrisch zum Chlor-Fluor-Austausch im Phosphorpentachlorid benötigen Menge zugibt.

Dabei soll das Abkühlen bezwecken, daß die Reaktion nicht zu heftig wird; je nach Abkühlung kann das HF schneller zugegeben werden. Kühlt man z. B. auf -40 °C, kann man HF schneller zugeben, als wenn man nur auf -10 °C kühlt. Prinzipiell kann man die Reaktion - unter entsprechend langsamer HF-Zugabe - schon bei Abkühlen auf 0 °C oder noch darüber durchführen.

Das LiF kann auch in situ hergestellt werden, z. B. aus Li-Halogeniden, wie LiCl oder LiBr, oder aus $Li_2CO_3$. Dann wird entsprechend mehr HF eingesetzt.

Das Molverhältnis von Phosphorpentachlorid zu Lithiumfluorid liegt vorteilhaft im Bereich von 1:1 bis 2:1. Besonders gute Ergebnisse werden erzielt, wenn das Molverhältnis von Phosphorpentachlorid zu Lithiumfluorid im Bereich von 1,2 bis 1,30 liegt.

Fluorwasserstoff wird zweckmäßig im stöchiometrischen Überschuß eingesetzt. Vorteilhafte Ergebnisse lassen sich erzielen, wenn das Molverhältnis von HF zu $PCl_5$ mindestens 5:1, vorzugsweise 7:1 bis 9:1 beträgt. Der Überschuß an Fluorwasserstoff fungiert als Lösungsmittel; ein Überschuß an HF bis zu einem Molverhältnis von HF zu $PCl_5$ von 15:1 kann mit guten Ergebnissen eingesetzt werden. Weiteres HF kann als Lösungsmittel zugesetzt werden.

Überraschend ist, daß nach dem erfindungsgemäßen Verfahren das gesamte Phosphorpentachlorid und das gesamte Lithiumfluorid vorgelegt werden können und dann mit Fluorwasserstoff zur Reaktion gebracht werden. Die notwendige Kühlung soll verhindern, daß die heftig einsetzende Reaktion durchgeht. Vorteilhaft ist es, das vorgelegte Phosphorpentachlorid und Lithiumfluorid auf eine Temperatur von unterhalb -50 °C abzukühlen. Dies kann man dadurch bewirken, daß man das Reaktionsgefäß in entsprechend temperierte Kältemischungen eintaucht. Üblicherweise verwendet man auf eine Temperatur von unterhalb -50 °C eingestellte Kryomaten. Vorteilhafterweise wird das Reaktionsgemisch von Phosphorpentachlorid, Lithiumfluorid und Fluorwasserstoff mindestens bis zur vollständigen Zugabe des Fluorwasserstoffs auf eine Temperatur unterhalb von -50 °C gekühlt, indem man das Reaktionsgefäß, beispielsweise einen Autoklaven, mit der auf eine Temperatur von unterhalb -50 °C gekühlten Kühlflüssigkeit kontaktiert. Die Heftigkeit der einsetzenden Reaktion kann dazu führen, daß das Reaktionsgemisch selbst sich auf Temperaturen oberhalb der genannten vorteilhaften Grenze von -50 °C erwärmt. Vorteilhaft ist die Zugabe von unterhalb -50 °C gekühlter HF.

Bevorzugt führt man die Umsetzung im offenen System durch. Dies wird im folgenden weiter erläutert.

Es hat sich als vorteilhaft erwiesen, das Reaktionsgemisch nach vollständiger Zugabe des Fluorwasserstoffs unter Kühlung, vorzugsweise unterhalb einer Temperatur von -50 °C, ausreagieren zu lassen. Dies kann beispielsweise während einer Zeitdauer von 5 Minuten bis hin zu 1 Stunde oder mehr erfolgen.

Weiterhin hat es sich als vorteilhaft erwiesen, zwecks Durchführung einer Nachreaktionsphase im offenen System die Temperatur des Kühlmittels auf 0 bis 15 °C einzuregeln. Entsprechend erwärmt sich auch das Reaktionsgemisch, vorteilhafterweise auf die Temperatur von 0 bis 15 °C. Bei dieser bevorzugten Temperatur kann man das Reaktionsgemisch noch einige Stunden, beispielsweise 5 Stunden bis hin zu 30 Stunden, nachreagieren lassen. Dies kann unter Spülung des drucklosen Autoklaven mit Inertgas, z. B. $N_2$ oder Ar, erfolgen.

Aus dem Reaktionsprodukt kann man etwaige vorhandene flüchtige Bestandteile im Vakuum entfernen. Gewünschtenfalls ist eine Umkristallisation und Filtration möglich.

Das erfindungsgemäße Verfahren gestattet die Herstellung von Lithiumhexafluorphosphat auf einfache Weise (weil zu einem Feststoffgemisch eine Flüssigkeit zugegeben wird) mit guter Ausbeute und in guter Reinheit. Das kristalline Produkt kann gemahlen werden, um etwaige HF-Einschlüsse nachfolgend unter Vakuum zu entfernen.

Das folgende Beispiel soll die Erfindung weiter erläutern, ohne sie in ihrem Umfang einzuschränken.

**Beispiel**

Herstellung von $LiPF_6$ aus LiF, $PCl_5$ (25 % Überschuß) und HF (Temperierung auf -78 °C)

$$PCl_5 + 5\ HF + LiF \rightarrow LiPF_6 + 5\ HCl$$

Allgemeines

Das Beispiel wurde in einem Laborautoklav (Volumen 300 ml; zulässiger Betriebsdruck 100 bar) der Firma Roth durchgeführt. Die Durchmischung des Reaktorinhaltes erfolgte mit einem magnetgekuppelten Rührer. Die Temperierung erfolgte mit Methanol, dieses wurde durch zwei Kryomaten temperiert. Ein zusätzliches Lösemittel (außer dem überschüssigem HF) wurde nicht eingesetzt.

| Eingesetzte Substanzmengen: | | |
|---|---|---|
| Fluorwasserstoff | 160,0 g | = 8 mol |
| Gesamtüberschuß | 122,5 g | = (fungiert auch als Lösemittel) |
| Lithiumfluorid | 7,8 g | = 0,30 mol |
| Phosphorpentachlorid | 78,2 g | = 0,375 mol/Überschuß von 25 % |
| Überschuß jeweils auf LiF berechnet | | |

Durchführung:

Das Phosphorpentachlorid wurde zusammen mit dem Lithiumfluorid in einer PE-Flasche durch Schütteln vermischt und anschließend in den Autoklav eindosiert.

Die Dosierung des auf -78 °C gekühlten Fluorwasserstoffes dauerte insgesamt 6 Minuten. Nach Ende der Zugabe des Fluorwasserstoffes wurde noch 6 Stunden unter paralleler Stickstoffspülung im "offenen System" nachgerührt. Danach wurde der Kryomat auf 10 °C eingestellt. Unter Stickstoffspülung wurde weitere 17 Stunden gerührt.

| Gesamte Reaktionsdauer | 23 h 6 min (gerechnet ab Zugabe des Fluorwasserstoffes) |
|---|---|
| Endtemperatur | 11,4 °C |

Der überschüssige Fluorwasserstoff wurde flüssig abgezogen. Die erhaltenen Kristalle wurden mit 10 ml kaltem Fluorwasserstoff gewaschen und abgefiltert.

Nachfolgend wurde der Feststoff im Vakuum getrocknet. Während der anschließenden Entnahme des Produktes in der Glovebox unter Stickstoffspülung kam es zu keiner Rauchentwicklung durch Fluorwasserstoff. Das Produkt war trocken. Es sah weiß aus. Im Anschluß wurde es in der Glovebox gemörsert.

Die Ausbeute betrug 39,6 g = 0,26 mol = 87,0 % bezogen auf LiF.

| Elementaranalyse (LiF$_6$P) | | |
|---|---|---|
| | theoretisch | gefunden |
| Li | 4,6 % | 4,6 % |
| F | 75,0 % | 75,9 % |
| P | 20,4 % | 19,6 % |

Bei der erhaltenen Substanz handelt es sich um Lithiumhexafluorophosphat. Beim IR-Spektrum wurde das gesuchte Produkt festgestellt.

**Patentansprüche**

1.  Verfahren zur Herstellung von LiPF$_6$ durch Umsetzung von PCl$_5$, LiF und HF, wobei man PCl$_5$ und LiF vorlegt, abkühlt und das HF in mindestens der stöchiometrisch zum vollständigen Chlor-Fluor-Austausch im PCl$_5$ benötigten Menge zugibt.

2.  Verfahren nach Anspruch 1, dadurch gekennzeichnet, daß man ein Molverhältnis von PCl$_5$ zu LiF von 1:1 bis 2:1, vorzugsweise von 1,2:1 bis 1,3:1 vorsieht.

3.  Verfahren nach Anspruch 1 oder 2 dadurch gekennzeichnet, daß das Molverhältnis zwischen HF und PCl$_5$ von 5:1 bis 15:1, vorzugsweise 7:1 bis 9:1 beträgt.

4.  Verfahren nach Anspruch 1, dadurch gekennzeichnet, daß das vorgelegte PCl$_5$ und LiF auf eine Temperatur von unterhalb -50 °C gekühlt wird.

5.  Verfahren nach Anspruch 4, dadurch gekennzeichnet, daß das Reaktionsgemisch von PCl$_5$, LiF und HF mindestens bis zur vollständigen Zugabe des HF auf eine Temperatur von unterhalb -50 °C gekühlt wird.

6.  Verfahren nach Anspruch 1, dadurch gekennzeichnet, daß man das Reaktionsgemisch auf eine Temperatur von 0 bis 15 °C kommen läßt.

7.  Verfahren nach Anspruch 6, dadurch gekennzeichnet, daß man die Umsetzung von PCl$_5$, LiF und HF im verschlossenen Autoklaven oder im offenen System durchführt.

8.  Verfahren nach Anspruch 7, dadurch gekennzeichnet, daß man nach vollständiger Zugabe des HF das Reaktionsgemisch unter Kühlung reagieren läßt.

9.  Verfahren nach den Ansprüchen 6,7 und 8, dadurch gekennzeichnet, daß man nach vollständiger Zugabe des HF das Reaktionsgemisch unter Kühlung bei einer Temperatur von unterhalb -50 °C reagieren läßt und das Reaktionsgemisch auf eine Temperatur von 0 bis 15 °C kommen läßt und unter Spülung mit Inertgas nachreagieren läßt.

10. Verfahren nach Anspruch 1, dadurch gekennzeichnet, daß man zusätzlichen Fluorwasserstoff als Lösungsmittel einsetzt.

**Claims**

1.  A method for the preparation of LiPF$_6$ by reaction of PCl$_5$, LiF and HF, wherein PCl$_5$ and LiF are combined, cooled and the HF is added in at least the amount stoichiometrically required for complete chlorine-fluorine exchange in the PCl$_5$.

2.  A method according to Claim 1, characterised in that a molar ratio of PCl$_5$ to LiF of 1:1 to 2:1, preferably of 1.2:1 to 1.3:1, is provided.

3. A method according to Claim 1 or 2, characterised in that the molar ratio of HF to $PCl_5$ is 5:1 to 15:1, preferably 7:1 to 9:1.

4. A method according to Claim 1, characterised in that the $PCl_5$ and LiF which are combined are cooled to a temperature of below -50°C.

5. A method according to Claim 4, characterised in that the reaction mixture of $PCl_5$, LiF and HF is cooled to a temperature of below -50°C at least until the HF has been completely added.

6. A method according to Claim 1, characterised in that the reaction mixture is allowed to come to a temperature of 0 to 15°C.

7. A method according to Claim 6, characterised in that the reaction of $PCl_5$, LiF and HF is effected in a closed autoclave or in an open system.

8. A method according to Claim 7, characterised in that once the addition of the HF is complete the reaction mixture is allowed to react under cooling.

9. A method according to Claims 6, 7 and 8, characterised in that once the addition of the HF is complete the reaction mixture is allowed to react under cooling at a temperature of below -50°C and the reaction mixture is allowed to come to a temperature of 0 to 15°C and is allowed to react subsequently under flushing with inert gas.

10. A method according to Claim 1, characterised in that additional hydrogen fluoride is used as solvent.

**Revendications**

1. Procédé de préparation de $LiPF_6$ par réaction de $PCl_5$ , LiF et HF, dans lequel on dispose $PCl_5$ et LiF, on refroidit et on ajoute HF en une quantité au moins stoechiométrique par rapport à l'échange chlore-fluor complet dans $PCl_5$.

2. Procédé selon la revendication 1, caractérisé en ce qu'on prévoit un rapport molaire de $PCl_5$ à LiF de 1:1 à 2:1 , de préférence de 1,2:1 à 1,3:1.

3. Procédé selon la revendication 1 ou 2, caractérisé en ce que le rapport molaire entre HF et $PCl_5$ est compris entre 5:1 et 15:1 , de préférence entre 7:1 et 9:1.

4. Procédé selon la revendication 1, caractérisé en ce qu'on refroidit le $PCl_5$ et le LiF disposés à une température inférieure à -50°C.

5. Procédé selon la revendication 4, caractérisé en ce qu'on refroidit le mélange réactionnel de $PCl_5$ , LiF et HF, au moins jusqu'à addition complète du HF, à une température inférieure à -50°C.

6. Procédé selon la revendication 1, caractérisé en ce qu'on laisse le mélange réactionnel venir à une température de 0 à 15°C.

7. Procédé selon la revendication 6, caractérisé en ce qu'on effectue la réaction de $PCl_5$, LiF et HF en autoclave fermé ou en système ouvert.

8. Procédé selon la revendication 7, caractérisé en ce qu'après l'addition complète du HF on laisse réagir le mélange réactionnel en refroidissant.

9. Procédé selon les revendications 6, 7 et 8, caractérisé en ce qu'après la fin de l'addition complète du HF, on laisse réagir le mélange réactionnel en refroidissant à une température inférieure à -50°C et en ce qu'on laisse venir le mélange réactionnel à une température de 0 à 15°C, et en ce qu'on fait encore réagir en balayant avec un gaz inerte.

10. Procédé selon la revendication 1, caractérisé en ce qu'on utilise de l'acide fluorhydrique supplémentaire comme solvant.